(19) Europäisches Patentamt / European Patent Office / Office européen des brevets

(11) **EP 4 715 318 A1**

(12) **EUROPEAN PATENT APPLICATION**

(43) Date of publication:
**25.03.2026 Bulletin 2026/13**

(21) Application number: **24201985.9**

(22) Date of filing: **23.09.2024**

(51) International Patent Classification (IPC):
**G01B 7/06** (2006.01)   **B21B 38/04** (2006.01)
**B21B 37/16** (2006.01)

(52) Cooperative Patent Classification (CPC):
**G01B 7/107; B21B 37/165; B21B 38/04; G01B 7/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG
5400 Baden (CH)**

(72) Inventor: **HALDIN, Martin
722 42 Västerås (SE)**

(74) Representative: **Kransell & Wennborg KB
P.O. Box 27834
115 93 Stockholm (SE)**

(54) **DETERMINING A THICKNESS OF A WORK ITEM WITH INHOMOGENEOUS RESISTIVITY**

(57)     A computer-implemented method for determining a thickness of a work item (104) comprising: controlling (S102) a magnetic field generating device (106) to apply a magnetic field pulse to the work item (104), acquiring (S104) a data signal (S) reflecting a time dependence of an eddy current decay in the work item caused by the applied magnetic field pulse, the data signal comprising multiple consecutive data samples, calculating (S106) a first thickness (tj0) of the work item based on a set of data samples in the data signal, calculating (S108) a first resistivity (res(Rs)) of the work item based on a first set (Rs) of data samples, calculating (S110) a second resistivity (res(tj2)) of the work item based on a second set (tj2) of data samples in the data signal including data samples subsequent to at least one sample in the first set (Rs) of data samples, determining (S112) a resistivity gradient compensation factor based on a difference between the second resistivity and the first resistivity, calculating (S114) a resistivity gradient compensated thickness (tj) of the work item based on the first thickness (tj0), a relation (f) between the first thickness and the first resistivity, and the resistivity gradient compensation factor, and providing (S116) an output of the resistivity gradient compensated thickness (tj) of the work item.

Fig. 2

**Description**

Field of the Invention

The present invention relates to a computer-implemented method for determining a thickness of a work item while being processed in a rolling mill. The present invention further relates to a control unit, a system and to a rolling mill.

Background

Metal rolling generally relates to producing a metal work piece with reduced and uniform thickness by rolling the metal work piece between two rotating work rolls.

In order to ensure high product quality, the thickness of the work piece is accurately monitored and controlled. It is especially important to monitor the rapid thickness variations in the work piece, such as a metal plate, even for very thin metal plates. The operation of the rolling mill can be controlled based on the measured thickness. In particular, the rolling mill at the last stand, i.e. at the end of the process line of the rolling mill, can be controlled based on the thickness measured upstream of the last stand in order to ensure the final product quality.

Conventionally used pulsed eddy current measurement technology is based on measuring eddy currents induced in the metal plate by a rapidly varying magnetic field applied to the metal plate. Based on the measured eddy currents are the resistivity and the thickness of the metal plate extracted.

However, for plates with inhomogeneous resistivity through the plate, conventional methods are not sufficiently accurate which leads to limited applicability.

Accordingly, it is desirable to improve the accuracy of thickness measurements in rolling mills, especially for metal plates with inhomogeneous resistivity.

Summary

In view of the above-mentioned and other drawbacks of the prior art, it is an object of the present invention to provide a method for determining a thickness of a work item having inhomogeneous resistivity with improved accuracy.

According to a first aspect of the invention, there is provided a computer-implemented method for determining a thickness of a work item while being processed in a rolling mill, the method comprising: controlling a magnetic field generating device to apply a magnetic field pulse to the work item, acquiring a data signal reflecting a time dependence of an eddy current decay in the work item caused by the applied magnetic field pulse, the data signal comprising multiple consecutive data samples, calculating a first thickness of the work item based on a set of data samples in the data signal, calculating a first resistivity of the work item based on a first set of data samples, calculating a second resistivity of the work item based on a second set of data samples in the data signal including data samples subsequent to at least one sample in the first set of data samples, determining a resistivity gradient compensation factor based on a difference between the second resistivity and the first resistivity, calculating a resistivity gradient compensated thickness of the work item based on the first thickness, and relation between the first thickness and the first resistivity, and the resistivity gradient compensation factor, and providing an output of the resistivity gradient compensated thickness of the work item.

The present invention is at least partly based on the realization to measure the response of the pulsed magnetic field at different depths of the work item. In this way, samples of the response from different depths in the work item are used to determine the resistivity at the different depths which can be used for determining a compensation factor used to account for the varying resistivity throughout the work item.

With the proposed method, thickness measurements for work items with inhomogeneous resistivity are obtained with improved accuracy. As a result, this allows for improved control of the thickness of rolled work items in a rolling mill, consequently allowing for higher production speed and better quality of the final processed work item.

The data signal is sampled after a time delay sufficiently long so that any initial high signal transients caused by the pulsed magnetic field is avoided in the sampled data signal. The time delay is sufficiently long so that the time dependence of the eddy current decay in the work item depends primarily on the ratio between thickness and resistivity, but also on the distance between the measurement device detecting the magnetic field produced by the eddy currents for determining the decay, often provided as a receiver coil. Thus, the thicknesses may be computed based on the time dependence of the eddy current decay.

More precisely, the thickness is preferably determined from the time derivative of the magnetic flux produced by the eddy currents of the work item after a predetermined delay, and the distance between the work item and the measurement device. For example, if the distance is constant the thickness may be determined by detecting the time dependence of the eddy current decay, and then use a model that relates time dependence of eddy current decay to thickness values, i.e. ratios between work item thickness and resistivity. This model may be theoretically established but may also be based on extensive prior measurements.

As mentioned above, the eddy currents may be detected by a receiver coil arranged a distance from the work item. In such case, a voltage signal is induced in the receiver coil by the time derivative of the magnetic field produced by the eddy currents in the work item. The voltage signal is preferably amplified and integrated to produce the acquired signal.

Preferably, the first set of data samples are samples in the data signal subsequent to distance samples. The distance samples, av1, are used for calculating the distance between the receiver coil and the work item.

In embodiments, the second set of data samples may reflect the time dependence of the eddy current decay when the eddy current has penetrated further into the work item compared in the first set of data samples. That is, the second set of data samples are subsequent to the first set of data samples in the data signal although an overlap between part of the samples is possible. In other words, the last samples of the first set of data samples may still overlap with the first samples in the second set of data samples. That the second set of data samples may reflect the time dependence of the eddy current decay when the eddy current has penetrated further into the work item provides for determining the resistivity deeper into the work item compared to using the first set of samples.

In embodiments, the relation between the first thickness and the first resistivity may be a predetermined function based on empirical data. The function may follow a polynomial dependence between thickness and resistivity. Using an empirical model provides an accurate way for calculating the resistivity gradient compensated thickness.

In embodiments, the second set of data samples may be included in the data samples used for calculating the first resistivity.

In embodiments, the first set (Rs) of data samples may reflect the time dependence of the eddy current decay when the eddy current has penetrated only partly through the work item. This advantageously provides for determining a resistivity that assumes a homogenous resistivity to be compensated by the subsequent steps of the method.

In embodiments, the resistivity gradient compensation factor may be dynamically updated during the processing of the work item in the rolling mill. This advantageously enables to account for changes in the work item's resistivity due to variations in temperature, composition, or processing speed.

In embodiments, the output of the resistivity gradient compensated thickness may be used to control one or more operational parameters of the rolling mill. For example, operational parameters may include the rolling force or rolling speed, to ensure the work item achieves a desired final thickness.

In embodiments, the method may further comprise storing the calculated resistivities, thicknesses, and the resistivity gradient compensation factor in a database for later analysis or quality control purposes. That is, the collected data may be used for making subsequent improvements to the method and/or rolling mill.

In embodiments, the method may comprise determining that the resistivity gradient compensated thickness deviates from a predefined acceptable range and generating an alert signal indicating the deviation. The deviation may advantageously indicate a potential defect or inconsistency in the work item. By generating an alert when the resistivity gradient compensated thickness deviates from the acceptable range, the system enables real-time monitoring of the work item's thickness. This facilitates immediate corrective actions, minimizing defective production and ensuring final product consistency.

In embodiments, the method may comprise calculating further resistivities of the work item based on further sets of data samples in the data signal including data samples subsequent to at least one sample in the first set of data samples and storing data of the further resistivities in a data storage. Advantageously, the stored data of the further resistivities may be used for analyzing the work item and get a more detailed picture of the resistivity gradient. This may provide more detailed insights of defects, compositions, or other inconsistencies in the work item.

The work item may be a metal plate or strip.

There is further provided a control unit configured to execute the steps of any of the embodiments of the first aspect.

According to a second aspect of the invention, there is provided a system comprising: a controllable magnetic field generating device; a receiver device for acquiring a data signal reflecting a time dependence of an eddy current decay in a work item, and a control unit configured to execute the steps of any of the embodiments of the first aspect.

A magnetic field generating device is preferably a coil which can produced magnetic field pulses using a pulsed power supply.

The receiver device is preferably a receiver coil the detects the magnetic field produced by eddy currents in the work item caused by the pulse applied by the magnetic field generating device.

Further effects and features of the second aspect of the invention are largely analogous to those described above in connection with the first aspect of the invention.

According to a third aspect of the invention, there is provided a rolling mill comprising: a set of work rolls configured to process a work item between work rolls to a predetermined work item thickness; and a system according to the second aspect.

Further effects and features of the third aspect of the invention are largely analogous to those described above in connection with the first aspect and the second aspect of the invention.

Further features of, and advantages with, the present invention will become apparent when studying the appended claims and the following description. The skilled person realize that different features of the present invention may be combined to create embodiments other than those described in the following, without departing from the scope of the present invention.

Brief Description of the Drawings

These and other aspects of the present invention will now be described in more detail, with reference to the appended drawings showing an example embodiment of the invention, wherein:

Fig. 1 conceptually illustrates a work item being processed in a rolling mill according to an embodiment of the invention;
Fig. 2 is a box diagram illustrating embodiments of the invention;
Fig. 3 is a flow-chart of method steps according to embodiments of the invention; and
Fig. 4 is a flow-chart of method steps according to embodiments of the invention.

Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

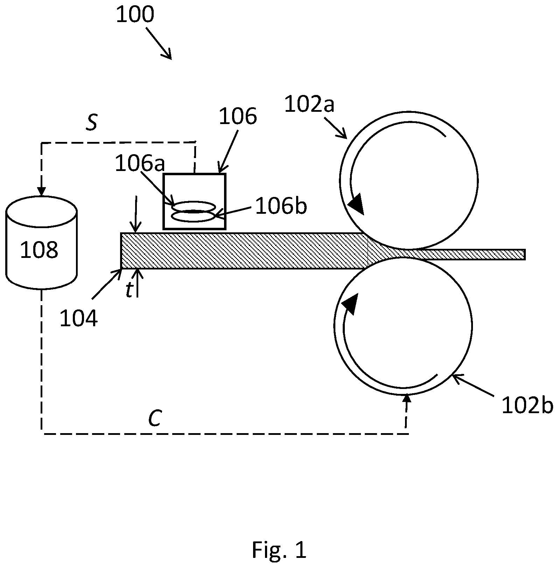

Fig. 1 conceptually illustrates a rolling mill 100 comprising a set of work rolls 102a and 102b adapted to process a work item 104. The work rolls 102a-b rotates while the work item 104, e.g. metal plate, is being fed between the work rolls 1 02a-b. The work rolls 102a-b reduces the thickness of the work item, as is appreciated by those skilled in the art. The work item 104 is a metal plate or strip.

It is desirable to accurately control the thickness of the work item 104 being output downstream of the work rolls 102a-b. For this, a pulsed eddy current technology device 106 is often employed that is based on applying a pulsed magnetic field to the work item 104. The pulsed eddy current technology device 106 detects the eddy currents induced in the work item 104 for estimating a thickness of a work item portion before the work item portion reaches the work rolls 102a-b. The present invention concerns improving the thickness estimation. More specifically, for work items 104 with inhomogeneous resistivity through its thickness dimension, traditional technology is not satisfactory accurate.

A control unit 108 is here conceptually shown which is configured to generate an output signal indicative of a thickness of a work item 104 while being processed in a rolling mill.

The control unit 108 is configured to acquire a data signal S reflecting a time dependence of an eddy current decay in the work item caused by an applied pulsed magnetic field. In other words, the control unit 108 is communicatively connected, either wirelessly or hardwired, with the pulsed eddy current technology device 106 such that the control unit 108 can receive data signals from the pulsed eddy current technology device 106. The time dependence of the eddy current decay reflects the derivative of the eddy current decay in the work item 102. The data signal S comprises multiple consecutive data samples.

The pulsed eddy current technology device 106 includes controllable magnetic field generating device 106a such as a coil, and a receiver device in the form of a receiver coil 106b in which a voltage signal is induced by the magnetic field produced by the eddy currents in the work item 104. The pulsed eddy current technology device 106 includes electronics for amplifying and integrating the voltage signal and provide the resulting signal S to the control unit 108.

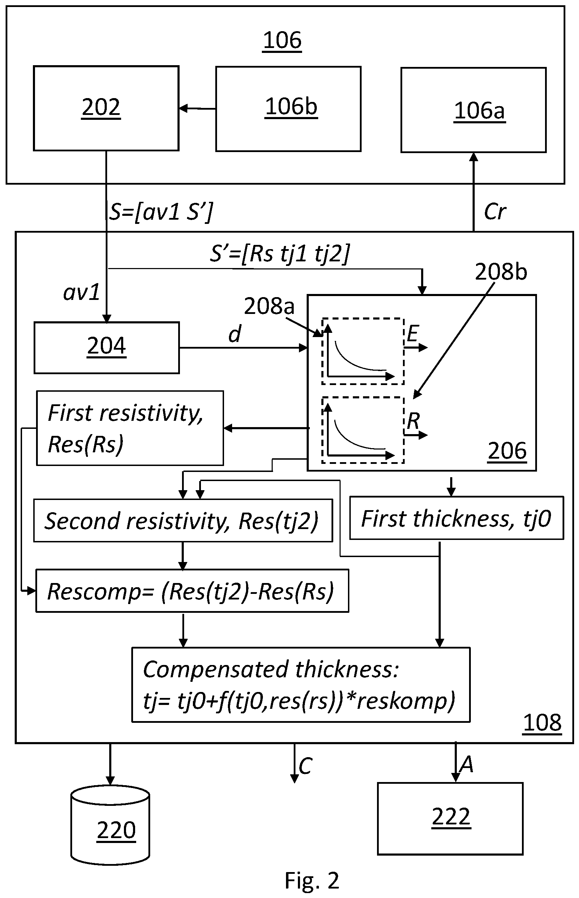

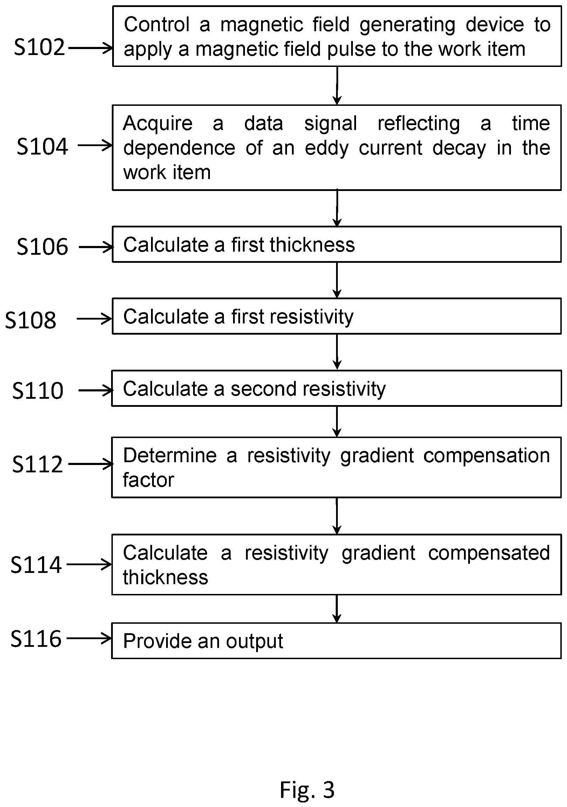

Fig. 2 is a box diagram that schematically illustrates embodiments of the invention. Fig. 3 is a flow chart of method steps according to embodiments of the invention and will be described in conjunction with fig. 2.

In step S102, the control unit 108 controls the magnetic field generating device 106 to apply a magnetic field pulse to the work item 104 by means of control signal Cr provided to the magnetic field generating device 106 to cause the coil 106a to generate a magnetic field pulse into the work item 104.

In step S104, the control unit 108 acquires a data signal S reflecting a time dependence of an eddy current decay in the work item caused by the applied magnetic field pulse, the data signal S comprising multiple consecutive data samples.

The acquired data signal S includes a set of data samples, of which initial data samples, also referred to as distance samples, av1, is provided from a data sampling module 202 including suitable data acquisition electronics to a software module 204 which may compute a distance, d, from the receiver coil 106b to the work item 104. Further, at least a subset of the data points S' is provided to a thickness computation module 206. The entire acquired data signal S may be provided to a thickness computation module 206, although only selected data points are enough. The data points S' should reflect the time dependence of the eddy current decay in the work item 104.

Based on the acquired signal S, the control unit 108 can determine a thickness value ($E$) and a resistivity value (R) of the work item. The thickness value ($E$) and the resistivity value (R) is determined from samples in the acquired signal. The thickness value E is dependent on a ratio between a thickness ($tj$) of the work item and a resistivity ($Res$) of the work item. In other words, $E \sim tj/res$.

The thickness value E may be determined using a model 208a that processes a determined eddy current time decay, such as the time derivative of the eddy current decay, and computes the thickness value E. Similarly, the resistivity value may be determined from a model 208b that processes a determined eddy current time decay and computes the resistivity value R. The models 208a,b may be empirically determined models that relates time dependencies of eddy current decay to thicknesses and resistivity of the work item 104.

In addition, the thickness value E may be determined further based on the determined distance, *d*. Thus, the distance *d*, may be entered as a parameter in the model 208a. The distance (d) between the receiver coil 106a, and the work item affects the strength of the detected magnetic flux. Therefore, the distance is a parameter that may be included into the determination of the thickness value *E*. The distance d is calculated based on the distance samples av1. That is, the distance d is determined from samples in the data signal S during an initial stage of the eddy current decay. As is known, a magnetic field strength decays with the distance to the source. This knowledge may be used for computing the distance to the work item 104 from the receiver coil 106b, instead of measuring the distance using a separate measurement means, such as optical or capacitive measurement devices.

The control unit 108 use the models 208a and 208b for calculating first and second thicknesses and first and second resistivities, generally referred to thickness value E and resistivity value R above.

Although the thickness value reflects the ratio between the thickness and the resistivity of the work item, it is not straight-forward to extract the thickness directly from the thickness parameter value since it requires knowledge of the resistivity of the work item. Embodiments of the present invention specifically address cases where the resistivity inhomogeneous.

In step S106, the control unit 108 calculates a first thickness (tj0) of the work item based on a set of data samples in the data signal. This first thickness (tj0) is the estimated full thickness of the work item assuming a homogenous resistivity through the work item.

In step S108 calculating a first resistivity, res(Rs), of the work item 104 based on a first set of data samples, Rs. The first set (Rs) of data samples reflect the time dependence of the eddy current decay when the eddy current has penetrated only partly through the work item 104. In other words, the first set Rs of data samples are samples in the data signal subsequent to the initial distance samples av1. The samples av1 are included in the full signal S.

In step S110, calculating, by the control unit 108, a second resistivity, res(tj2), of the work item 104 based on a second set of data samples, tj2, in the data signal S' including data samples subsequent to at least one sample in the first set (Rs) of data samples, and based on the first thickness, tj0. The second set (tj2) of data samples are consecutive to the first set of data samples (Rs). This means that the second set (tj2) of data samples reflect the time dependence of the eddy current decay when the eddy current has penetrated further into the work item compared in the first set (Rs) of data samples. The thickness values E, here the first thickness (tj0) reflects a relationship, or ratio between the thickness and the resistivity of the work item. Therefore, the first thickness tj0 is used when calculating the second resistivity (res(tj2)) since the data signal tj2 depends on both thickness and resistivity.

In step S112, the control unit 108 determines a resistivity gradient compensation factor, *rescomp,* based on a difference between the second resistivity and the first resistivity. The resistivity gradient compensation factor, *rescomp,* may be given by:

$$Rescomp = Res(tj2) - Res(tj1).$$

The resistivity gradient compensation factor (rescomp) is preferably dynamically updated during the processing of the work item 104 in the rolling mill 100 to account for changes in the work item's resistivity due to variations in temperature, composition, or processing speed.

In step S114, the control unit 108 calculates a resistivity gradient compensated thickness, tj, of the work item 104 based on the first thickness (tj0), and relation *f* between the first thickness and the first resistivity, and the resistivity gradient compensation factor. The relation, *f*, between the first thickness and the first resistivity is a predetermined function, *f*, based on empirical data. The function f is typically a polynomial function.

As an example, the relation *f* between a first thickness (tj0) and a first resistivity (Res(rs)) may be empirically determined by measuring, using a gauge (e.g. a BoxGauge), resistivity, and resistivity gradient compensation factors for a plurality of work items. The actual thicknesses of the work items are measured using a mechanical thickness measurement device. Using the measured resistivity, resistivity gradient compensation factors, and the measured thicknesses, the variation of the relation f can be empirically determined.

In step S116, the control unit 108 provides an output, C, of the resistivity gradient compensated thickness (tj) of the work item 104.

The output, C, of the resistivity gradient compensated thickness (tj) may be used to control one or more operational parameters of the rolling mill 100, such as the rolling force or rolling speed, to ensure the work item 104 achieves a desired final thickness.

The control unit 108 may store the calculated resistivities ((Res(Rs)), Res(tj2)), thicknesses (tj0, tj), and the resistivity gradient compensation factor (rescomp) in a database 220 for later analysis or quality control purposes.

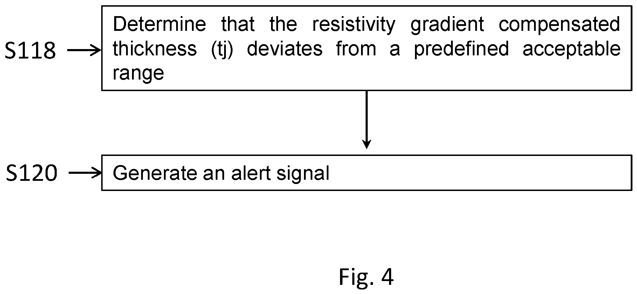

Now turning also to the flow-chart in fig. 4. In some embodiments, the control unit 108 determines that the resistivity gradient compensated thickness (tj) deviates from a predefined acceptable range. A deviation from the predefined acceptable range indicates a potential defect or inconsistency in the work item. For example, the thickness may be too small or too large compared to the predefined acceptable, that is the resistivity gradient compensated thickness may exceed or fall below the predefined acceptable range. The predefined acceptable range may include a target thickness value and an acceptable margin of deviation. The predefined acceptable range depends on the acceptable manufacturing tolerances for the process at a hand.

In response to detecting the deviation, the control unit 108 generates, in step S120, an alert signal A indicating the deviation to a user or operator of the rolling mill, for example on a user interface 222 such as a display or a speaker. In this way, human intervention can occur. In other possible implementation automated intervention may occur. Intervention or correction may include adjusting the rolling force, speed, or other process parameters, to correct the issue.

The data signal S' may be split into further data sets, that is:

$$S'=[Rs\ tj1\ldots tjx\ldots].$$

In this way, the control unit 108 can calculate further resistivities (res(tjX)) of the work item 104 based on each of the further sets (tjX) of data samples in the data signal. The further sets of data samples include data samples subsequent to at least one sample in the first set (Rs) of data samples. Data of the further resistivities (res(tjX)) may be stored in the data storage 220 such as the resistivity properties of the work item can be analyzed.

It should be understood the that the above process for determining the resistivity gradient compensated thickness of the work item is performed while the work item 104 is being processed in the rolling mill 100. The accurate determination of the present resistivity gradient compensated thickness provides for improved control of the thickness of the work item 104 even if the processing speed in the rolling mill 100, i.e. the feed speed of the work item 104 is increased. Accordingly, the control unit 108 operates to determine the present resistivity gradient compensated thickness online while the work item 104 is fed through the rolling mill.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

Communication between devices, control units or other modules described herein may be wireless or hardwired as is suitable and implement a suitable protocol for the specific case.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A computer-implemented method for determining a thickness of a work item (104) while being processed in a rolling mill (100), the method comprising:

   controlling (S102) a magnetic field generating device (106) to apply a magnetic field pulse to the work item (104),
   acquiring (S104) a data signal (S) reflecting a time dependence of an eddy current decay in the work item caused by the applied magnetic field pulse, the data signal comprising multiple consecutive data samples,
   calculating (S106) a first thickness (tj0) of the work item based on a set of data samples in the data signal,
   calculating (S108) a first resistivity (res(Rs)) of the work item based on a first set (Rs) of data samples,
   calculating (S110) a second resistivity (res(tj2)) of the work item based on a second set (tj2) of data samples in the data signal including data samples subsequent to at least one sample in the first set (Rs) of data samples,
   determining (S112) a resistivity gradient compensation factor based on a difference between the second resistivity and the first resistivity,
   calculating (S114) a resistivity gradient compensated thickness (tj) of the work item based on the first thickness (tj0), a relation (f) between the first thickness and the first resistivity, and the resistivity gradient compensation factor, and
   providing (S116) an output of the resistivity gradient compensated thickness (*tj*) of the work item.

2. The method according to claim 1, wherein the second set (tj2) of data samples reflect the time dependence of the eddy current decay when the eddy current has penetrated further into the work item (104) compared to in the first set (Rs) of data samples.

3. The method according to any one of claims 1-2, wherein the relation between the first thickness and the first resistivity is a predetermined function based on empirical data.

4. The method according to any one of claims 1-3, wherein the second set of data samples are included in the data samples used for calculating the first resistivity.

5. The method according to any one of claims 1-4, wherein the first set of data samples reflect the time dependence of the eddy current decay when the eddy current has penetrated only partly through the work item (104).

6. The method according to any one of claims 1-5, wherein the resistivity gradient compensation factor is dynamically updated during the processing of the work item (104) in the rolling mill (100).

7. The method according to any one of claims 1-6, wherein the output of the resistivity gradient compensated thickness is used to control one or more operational parameters of the rolling mill.

8. The method according to any one of claims 1-7, further comprising storing the calculated resistivities, thicknesses, and the resistivity gradient compensation factor in a database for later analysis or quality control purposes.

9. The method according to any one of claims 1-8, further comprising:

   determining (S118) that the resistivity gradient compensated thickness (tj) deviates from a predefined acceptable range, and
   generating (S120) an alert signal indicating the deviation.

10. The method according to any one of claims 1-9, comprising: calculating further resistivities (res(tjX)) of the work item based on further sets (tjX) of data samples in the data signal including data samples subsequent to at least one sample in the first set (Rs) of data samples, and
storing data of the further resistivities (res(tjX)) in a data storage.

11. The method according to any one of claims 1-10, wherein the first set (Rs) of data samples are samples in the data signal subsequent to distance samples (av1) used for calculating a distance between a receiver coil configured to measure the eddy current decay and the work item.

12. The method according to any one of claims 1-11, wherein the work item is a metal plate or strip.

13. A control unit (108) configured to execute the steps of any of the preceding claims.

14. A system comprising:

   a controllable magnetic field generating device (106);
   a receiver device (106a) for acquiring a data signal reflecting a time dependence of an eddy current decay in a work item (104), and
   a control unit (108) according to claim 13.

15. A rolling mill (100) comprising:

   a set of work rolls (102a,b) configured to process a work item (104) between work rolls to a predetermined work item thickness; and
   a system according to claim 14.

Fig. 1

Fig. 2

| S102 → | Control a magnetic field generating device to apply a magnetic field pulse to the work item |
|---|---|

| S104 → | Acquire a data signal reflecting a time dependence of an eddy current decay in the work item |
|---|---|

| S106 → | Calculate a first thickness |
|---|---|

| S108 → | Calculate a first resistivity |
|---|---|

| S110 → | Calculate a second resistivity |
|---|---|

| S112 → | Determine a resistivity gradient compensation factor |
|---|---|

| S114 → | Calculate a resistivity gradient compensated thickness |
|---|---|

| S116 → | Provide an output |
|---|---|

Fig. 3

| S118 → | Determine that the resistivity gradient compensated thickness (tj) deviates from a predefined acceptable range |
|---|---|

| S120 → | Generate an alert signal |

Fig. 4

# EP 4 715 318 A1

## EUROPEAN SEARCH REPORT

**Application Number**

EP 24 20 1985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 901 564 A1 (ABB SCHWEIZ AG [CH]) 27 October 2021 (2021-10-27) * abstract; figures 1-4 * * paragraphs [0042] - [0069] * ----- | 1-15 | INV. G01B7/06 B21B38/04 B21B37/16 |
| A | US 2022/282964 A1 (LINDER STEN [SE] ET AL) 8 September 2022 (2022-09-08) * abstract; figures 1-7 * * paragraphs [0025] - [0060] * ----- | 1-15 | |
| A | EP 1 196 737 B1 (ABB AB [SE]) 6 August 2008 (2008-08-06) * paragraphs [0022] - [0035]; figures 1-5 * ----- | 1-15 | |

TECHNICAL FIELDS
SEARCHED (IPC)

G01B
B21B

The present search report has been drawn up for all claims

| Place of search | Date of completion of the search | Examiner |
|---|---|---|
| Munich | 24 February 2025 | Marani, Roberta |

EPO FORM 1503 03.82 (P04C01)

## ANNEX TO THE EUROPEAN SEARCH REPORT
## ON EUROPEAN PATENT APPLICATION NO.

EP 24 20 1985

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | | Publication date | Patent family member(s) | | Publication date |
|---|---|---|---|---|---|
| EP 3901564 | A1 | 27-10-2021 | CN | 113532254 A | 22-10-2021 |
| | | | EP | 3901564 A1 | 27-10-2021 |
| | | | ES | 2945565 T3 | 04-07-2023 |
| | | | JP | 2021171822 A | 01-11-2021 |
| | | | KR | 20210130639 A | 01-11-2021 |
| | | | US | 2021325167 A1 | 21-10-2021 |
| US 2022282964 | A1 | 08-09-2022 | CN | 114993155 A | 02-09-2022 |
| | | | EP | 4053494 A1 | 07-09-2022 |
| | | | JP | 2022134102 A | 14-09-2022 |
| | | | KR | 20220124087 A | 13-09-2022 |
| | | | US | 2022282964 A1 | 08-09-2022 |
| EP 1196737 | B1 | 06-08-2008 | AT | E403844 T1 | 15-08-2008 |
| | | | AU | 6035600 A | 31-01-2001 |
| | | | CN | 1372628 A | 02-10-2002 |
| | | | EP | 1196737 A1 | 17-04-2002 |
| | | | JP | 4563633 B2 | 13-10-2010 |
| | | | JP | 2003503683 A | 28-01-2003 |
| | | | US | 6661224 B1 | 09-12-2003 |
| | | | WO | 0101065 A1 | 04-01-2001 |

EPO FORM P0459

For more details about this annex : see Official Journal of the European Patent Office, No. 12/82